# EUROPEAN PATENT SPECIFICATION

(11) **EP 1 340 223 B1**
(45) Date of publication and mention of the grant of the patent: **04.10.2006**
(21) Application number: 01984988.4
(22) Date of filing: 04.12.2001
(51) Int. Cl.: G10L 15/08

(54) **METHOD AND APPARATUS FOR ROBUST SPEECH CLASSIFICATION**
VERFAHREN UND VORRICHTUNG ZUR ROBUSTEN SPRACHKLASSIFIKATION
PROCEDE ET DISPOSITIF DE CLASSIFICATION VOCALE ROBUSTE

(30) Priority: 08.12.2000 US 733740
(43) Date of publication of application: 03.09.2003
(73) Proprietor: QUALCOMM INCORPORATED, San Diego, CA 92121-1714 (US)
(72) Inventor: HUANG, Pengjun, San Diego, CA 92131 (US)
(74) Representative: Dunlop, Hugh Christopher
(86) International application number: PCT/US2001/046971
(87) International publication number: WO 2002/047068

(56) References cited:
- EP-A- 0 451 796
- EP-A- 0 543 719
- US-A- 5 749 067
- US-A- 5 774 847

## Description

### BACKGROUND

### I. Field

The disclosed embodiments relate to the field of speech processing. More particularly, the disclosed embodiments relate to a novel and improved method and apparatus for robust speech classification.

### II. Background

Transmission of voice by digital techniques has become widespread, particularly in long distance and digital radio telephone applications. This, in turn, has created interest in determining the least amount of information that can be sent over a channel while maintaining the perceived quality of the reconstructed speech. If speech is transmitted by simply sampling and digitizing, a data rate on the order of sixty-four kilobits per second (kbps) is required to achieve a speech quality of conventional analog telephone. However, through the use of speech analysis, followed by the appropriate coding, transmission, and re-synthesis at the receiver, a significant reduction in the data rate can be achieved. The more accurately speech analysis can be performed, the more appropriately the data can be encoded, thus reducing the data rate.

Devices that employ techniques to compress speech by extracting parameters that relate to a model of human speech generation are called speech coders. A speech coder divides the incoming speech signal into blocks of time, or analysis frames. Speech coders typically comprise an encoder and a decoder, or a codec. The encoder analyzes the incoming speech frame to extract certain relevant parameters, and then quantizes the parameters into binary representation, i.e., to a set of bits or a binary data packet. The data packets are transmitted over the communication channel to a receiver and a decoder. The decoder processes the data packets, de-quantizes them to produce the parameters, and then re-synthesizes the speech frames using the de-quantized parameters.

The function of the speech coder is to compress the digitized speech signal into a low-bit-rate signal by removing all of the natural redundancies inherent in speech. The digital compression is achieved by representing the input speech frame with a set of parameters and employing quantization to represent the parameters with a set of bits. If the input speech frame has a number of bits Nₗ and the data packet produced by the speech coder has a number of bits Nₒ, the compression factor achieved by the speech coder is Cᵣ = Nₗ/Nₒ. The challenge is to retain high voice quality of the decoded speech while achieving the target compression factor. The performance of a speech coder depends on (1) how well the speech model, or the combination of the analysis and synthesis process described above, performs, and (2) how well the parameter quantization process is performed at the target bit rate of Nₒ bits per frame. The goal of the speech model is thus to capture the essence of the speech signal, or the target voice quality, with a small set of parameters for each frame.

Speech coders may be implemented as time-domain coders, which attempt to capture the time-domain speech waveform by employing high time-resolution processing to encode small segments of speech (typically 5 millisecond (ms) sub-frames) at a time. For each sub-frame, a high-precision representative from a codebook space is found by means of various search algorithms known in the art. Alternatively, speech coders may be implemented as frequency-domain coders, which attempt to capture the short-term speech spectrum of the input speech frame with a set of parameters (analysis) and employ a corresponding synthesis process to recreate the speech waveform from the spectral parameters. The parameter quantizer preserves the parameters by representing them with stored representations of code vectors in accordance with known quantization techniques described in A. Gersho & R.M. Gray, *Vector Quantization and Signal Compression* (1992).

A well-known time-domain speech coder is the Code Excited Linear Predictive (CELP) coder described in L.B. Rabiner & R.W. Schafer, *Digital Processing of Speech Signals* 396-453 (1978).In a CELP coder, the short term correlations, or redundancies, in the speech signal are removed by a linear prediction (LP) analysis, which finds the coefficients of a short-term formant filter. Applying the short-term prediction filter to the incoming speech frame generates an LP residue signal, which is further modeled and quantized with long-term prediction filter parameters and a subsequent stochastic codebook. Thus, CELP coding divides the task of encoding the time-domain speech waveform into the separate tasks of encoding of the LP short-term filter coefficients and encoding the LP residue. Time-domain coding can be performed at a fixed rate (i.e., using the same number of bits, Nₒ, for each frame) or at a variable rate (in which different bit rates are used for different types of frame contents). Variable-rate coders attempt to use only the amount of bits needed to encode the codec parameters to a level adequate to obtain a target quality. An exemplary variable rate CELP coder is described in U.S. Patent No. 5,414,796, which is assigned to the assignee of the presently disclosed embodiments.

Time-domain coders such as the CELP coder typically rely upon a high number of bits, Nₒ, per frame to preserve the accuracy of the time-domain speech waveform. Such coders typically deliver excellent voice quality provided the number of bits, Nₒ, per frame is relatively large (e.g., 8 kbps or above). However, at low bit rates (4 kbps and below), time-domain coders fail to retain high quality and robust performance due to the limited number of available bits. At low bit rates, the limited codebook space clips the waveform-matching capability of conventional time-domain coders, which are so successfully deployed in higher-rate commercial applications.

Typically, CELP schemes employ a short term prediction (STP) filter and a long term prediction (LTP) filter. An Analysis by Synthesis (AbS) approach is employed at an encoder to find the LTP delays and gains, as well as the best stochastic codebook gains and indices. Current state-of-the-art CELP coders such as the Enhanced Variable Rate Coder (EVRC) can achieve good quality synthesized speech at a data rate of approximately 8 kilobits per second.

It is also known that unvoiced speech does not exhibit periodicity. The bandwidth consumed encoding the LTP filter in the conventional CELP schemes is not as efficiently utilized for unvoiced speech as for voiced speech, where periodicity of speech is strong and LTP filtering is meaningful. Therefore, a more efficient (i.e., lower bit rate) coding scheme is desirable for unvoiced speech. Accurate speech classification is necessary for selecting the most efficient coding schemes, and achieving the lowest data rate.

For coding at lower bit rates, various methods of spectral, or frequency-domain, coding of speech have been developed, in which the speech signal is analyzed as a time-varying evolution of spectra. *See, e.g.,* R.J. McAulay & T.F. Quatieri, Sinusoidal Coding, *in Speech Coding and Synthesis* ch. 4 (W.B. Kleijn & K.K. Paliwal eds., 1995). In spectral coders, the objective is to model, or predict, the short-term speech spectrum of each input frame of speech with a set of spectral parameters, rather than to precisely mimic the time-varying speech waveform. The spectral parameters are then encoded and an output frame of speech is created with the decoded parameters. The resulting synthesized speech does not match the original input speech waveform, but offers similar perceived quality. Examples of frequency-domain coders that are well known in the art include multiband excitation coders (MBEs), sinusoidal transform coders (STCs), and harmonic coders (HCs). Such frequency-domain coders offer a high-quality parametric model having a compact set of parameters that can be accurately quantized with the low number of bits available at low bit rates.

Nevertheless, low-bit-rate coding imposes the critical constraint of a limited coding resolution, or a limited codebook space, which limits the effectiveness of a single coding mechanism, rendering the coder unable to represent various types of speech segments under various background conditions with equal accuracy. For example, conventional low-bit-rate, frequency-domain coders do not transmit phase information for speech frames. Instead, the phase information is reconstructed by using a random, artificially generated, initial phase value and linear interpolation techniques. *See, e.g.,* H*.* Yang et al., Quadratic Phase Interpolation for Voiced Speech Synthesis in the MBE Model, *in 29 Electronic Letters* 856-57 (May 1993). Because the phase information is artificially generated, even if the amplitudes of the sinusoids are perfectly preserved by the quantization - de-quantization process, the output speech produced by the frequency-domain coder will not be aligned with the original input speech (i.e., the major pulses will not be in sync). It has therefore proven difficult to adopt any closed-loop performance measure, such as, e.g., signal-to-noise ratio (SNR) or perceptual SNR, in frequency-domain coders.

One effective technique to encode speech efficiently at low bit rate is multi-mode coding. Multi-mode coding techniques have been employed to perform low-rate speech coding in conjunction with an open-loop mode decision process. One such multi-mode coding technique is described in Amitava Das et al., Multi-mode and Variable-Rate Coding of Speech, *in Speech Coding and Synthesis* ch. 7 (W.B. Kleijn & K.K. Paliwal eds., 1995). Conventional multi-mode coders apply different modes, or encoding-decoding algorithms, to different types of input speech frames. Each mode, or encoding-decoding process, is customized to represent a certain type of speech segment, such as, e.g., voiced speech, unvoiced speech, or background noise (non-speech) in the most efficient manner. The success of such multi-mode coding techniques is highly dependent on correct mode decisions, or speech classifications. An external, open loop mode decision mechanism examines the input speech frame and makes a decision regarding which mode to apply to the frame. The open-loop mode decision is typically performed by extracting a number of parameters from the input frame, evaluating the parameters as to certain temporal and spectral characteristics, and basing a mode decision upon the evaluation. The mode decision is thus made without knowing in advance the exact condition of the output speech, i.e., how close the output speech will be to the input speech in terms of voice quality or other performance measures. An exemplary open-loop mode decision for a speech codec is described in U.S. Patent No. 5,414,796, which is assigned to the assignee of the present invention.

Multi-mode coding can be fixed-rate, using the same number of bits Nₒ for each frame, or variable-rate, in which different bit rates are used for different modes. The goal in variable-rate coding is to use only the amount of bits needed to encode the codec parameters to a level adequate to obtain the target quality. As a result, the same target voice quality as that of a fixed-rate, higher-rate coder can be obtained at a significant lower average-rate using variable-bit-rate (VBR) techniques. An exemplary variable rate speech coder is described in U.S. Patent No. 5,414,796. There is presently a surge of research interest and strong commercial need to develop a high-quality speech coder operating at medium to low bit rates (i.e., in the range of 2.4 to 4 kbps and below). The application areas include wireless telephony, satellite communications, Internet-telephony, various multimedia and voice-streaming applications, voice mail, and other voice storage systems. The driving forces are the need for high capacity and the demand for robust performance under packet loss situations. Various recent speech coding standardization efforts are another direct driving force propelling research and development of low-rate speech coding algorithms. A low-rate speech coder creates more channels, or users, per allowable application bandwidth. A low-rate speech coder coupled with an additional layer of suitable channel coding can fit the overall bit-budget of coder specifications and deliver a robust performance under channel error conditions.

Multi-mode VBR speech coding is therefore an effective mechanism to encode speech at low bit rate. Conventional multi-mode schemes require the design of efficient encoding schemes, or modes, for various segments of speech (e.g., unvoiced, voiced, transition) as well as a mode for background noise, or silence. The overall performance of the speech coder depends on the robustness of the mode classification and how well each mode performs. The average rate of the coder depends on the bit rates of the different modes for unvoiced, voiced, and other segments of speech. In order to achieve the target quality at a low average rate, it is necessary to correctly determine the speech mode under varying conditions. Typically, voiced and unvoiced speech segments are captured at high bit rates, and background noise and silence segments are represented with modes working at a significantly lower rate. Multi-mode variable bit rate encoders require correct speech classification to accurately capture and encode a high percentage of speech segments using a minimal number of bits per frame. More accurate speech classification produces a lower average encoded bit rate, and higher quality decoded speech. Previously, speech classification techniques considered a minimal number of parameters for isolated frames of speech only, producing few and inaccurate speech mode classifications. Thus, there is a need for a high performance speech classifier to correctly classify numerous modes of speech under varying environmental conditions in order to enable maximum performance of multi-mode variable bit rate encoding-techniques.

### SUMMARY

The disclosed embodiments are directed to a robust speech classification technique that evaluates numerous characteristic parameters of speech to classify various modes of speech with a high degree of accuracy under a variety of conditions. Accordingly, in one aspect, a method of speech classification is disclosed as set forth in claim 1.

In another aspect, a speech classifier is disclosed as set forth in claim 7.

### BRIEF DESCRIPTION OF THE DRAWINGS

The features, objects, and advantages of the present invention will become more apparent from the detailed description set forth below when taken in conjunction with the drawings in which like reference characters identify correspondingly throughout and wherein:
FIG. 1 is a block diagram of a communication channel terminated at each end by speech coders;
FIG. 2 is a block diagram of a robust speech classifier that can be used by the encoders illustrated in Fig. 1;
FIG. 3 is a flow chart illustrating speech classification steps of a robust speech classifier;
FIG. 4A, 4B, and 4C are state diagrams used by the disclosed embodiments for speech classification;
FIG. 5A, 5B, and 5C are decision tables used by the disclosed embodiments for speech classification; and
FIG. 6 is an exemplary graph of one embodiment of a speech signal with classification parameter, and speech mode values.

### DETAILED DESCRIPTION OF THE PREFERRED EMBODIMENTS

The disclosed embodiments provide a method and apparatus for improved speech classification in vocoder applications. Novel classification parameters are analyzed to produce more speech classifications with higher accuracy than previously available. A novel decision making process is used to classify speech on a frame by frame basis. Parameters derived from original input speech, SNR information, noise suppressed output speech, voice activity information, Linear Prediction Coefficient (LPC) analysis, and open loop pitch estimations are employed by a novel state based decision maker to accurately classify various modes of speech. Each frame of speech is classified by analyzing past and future frames, as well as the current frame. Modes of speech that can be classified by the disclosed embodiments comprise transient, transitions to active speech and at end of words, voiced, unvoiced and silence.

The disclosed embodiments present a speech classification technique for a variety of speech modes in environments with varying levels of ambient noise. Speech modes can be reliably and accurately identified for encoding in the most efficient manner.

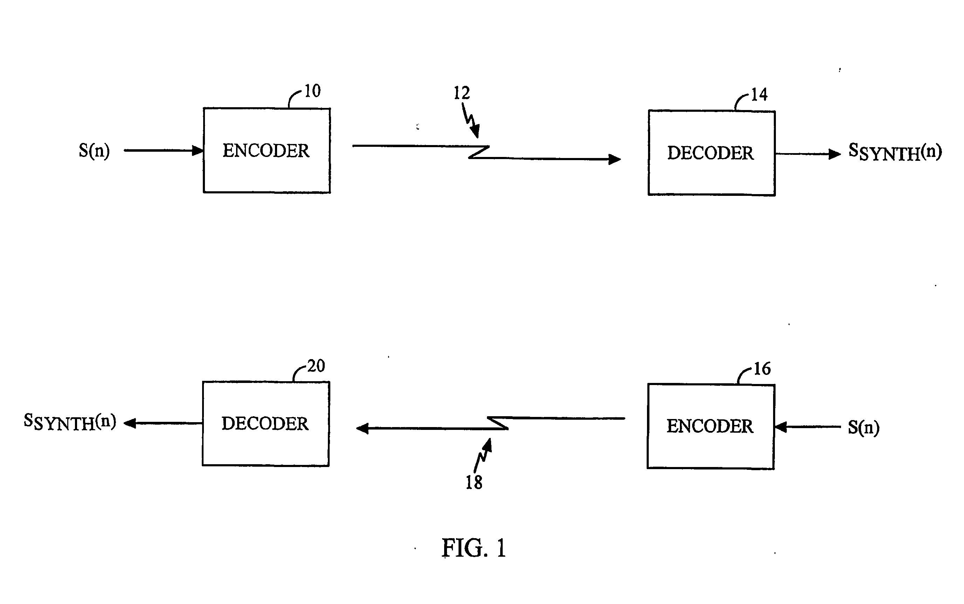

In FIG. 1 a first encoder **10** receives digitized speech samples s(n) and encodes the samples s(n) for transmission on a transmission medium **12,** or communication channel **12,** to a first decoder **14.** The decoder **14** decodes the encoded speech samples and synthesizes an output speech signal s_{SYNTH}(n). For transmission in the opposite direction, a second encoder **16** encodes digitized speech samples s(n), which are transmitted on a communication channel **18.** A second decoder **20** receives and decodes the encoded speech samples, generating a synthesized output speech signal s_{SYNTH}(n).

The speech samples, s(n), represent speech signals that have been digitized and quantized in accordance with any of various methods known in the art including, e.g., pulse code modulation (PCM), companded µ-law, or A-law. As known in the art, the speech samples, s(n), are organized into frames of input data wherein each frame comprises a predetermined number of digitized speech samples s(n). In an exemplary embodiment, a sampling rate of 8 kHz is employed, with each 20 ms frame comprising 160 samples. In the embodiments described below, the rate of data transmission may be varied on a frame-to-frame basis from 8 kbps (full rate) to 4 kbps (half rate) to 2 kbps (quarter rate) to 1 kbps (eighth rate). Alternatively, other data rates may be used. As used herein, the terms "full rate" or "high rate" generally refer to data rates that are greater than or equal to 8 kbps, and the terms "half rate" or "low rate" generally refer to data rates that are less than or equal to 4 kbps. Varying the data transmission rate is beneficial because lower bit rates may be selectively employed for frames containing relatively less speech information. As understood by those skilled in the art, other sampling rates, frame sizes, and data transmission rates may be used.

The first encoder 10 and the second decoder **20** together comprise a first speech coder, or speech codec. Similarly, the second encoder **16** and the first decoder **14** together comprise a second speech coder. It is understood by those of skill in the art that speech coders may be implemented with a digital signal processor (DSP), an application-specific integrated circuit (ASIC), discrete gate logic, firmware, or any conventional programmable software module and a microprocessor. The software module could reside in RAM memory, flash memory, registers, or any other form of writable storage medium known in the art. Alternatively, any conventional processor, controller, or state machine could be substituted for the microprocessor. Exemplary ASICs designed specifically for speech coding are described in U.S. Patent Nos. 5,727,123 and 5,784,532 assigned to the assignee of the present invention and fully incorporated herein by reference.

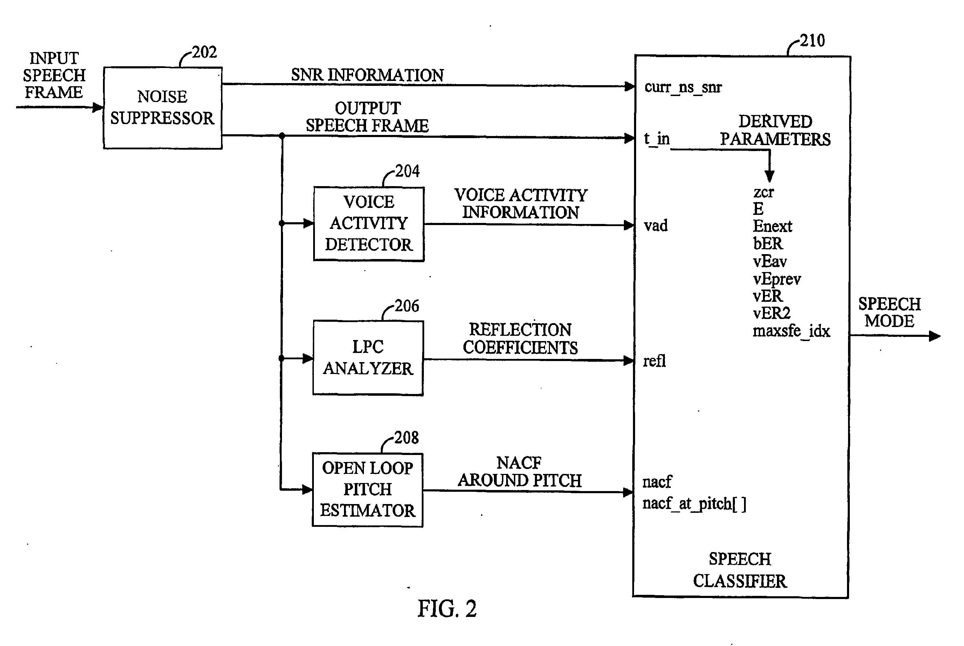

FIG. 2 illustrates an exemplary embodiment of a robust speech classifier. In one embodiment, the speech classification apparatus of FIG. 2 can reside in the encoders (**10**, **16)** of FIG. 1. In another embodiment, the robust speech classifier can stand alone, providing speech classification mode output to devices such as the encoders **(10, 16)** of FIG. 1.

In FIG. 2, input speech is provided to a noise suppresser **(202).** Input speech is typically generated by analog to digital conversion of a voice signal. The noise suppresser **(202)** filters noise components from the input speech signal producing a noise suppressed output speech signal, and SNR information for the current output speech. The SNR information and output speech signal are input to speech classifier **(210).** The output speech signal of the noise suppresser **(202)** is also input to voice activity detector **(204),** LPC Analyzer **(206),** and open loop pitch estimator **(208).** The SNR information is used by the speech classifier **(210)** to set periodicity thresholds and to distinguish between clean and noisy speech. The SNR parameter is hereinafter referred to as *curr_ns_snr.* The output speech signal is hereinafter referred to as t_in. If, in one embodiment, the noise suppressor **(202)** is not present, or is turned off , the SNR parameter *curr_ns_snr* should be pre-set to a default value.

The voice activity detector **(204)** outputs voice activity information for the current speech to speech classifier **(210).** The voice activity information output indicates if the current speech is active or inactive. In one exemplary embodiment, the voice activity information output can be binary, i.e., active or inactive. In another embodiment, the voice activity information output can be multi-valued. The voice activity information parameter is herein referred to as *vad.*

The LPC analyzer **(206)** outputs LPC reflection coefficients for the current output speech to speech classifier **(210).** The LPC analyzer **(206)** may also output other parameters such as LPC coefficients. The LPC *refl*ection coefficient parameter is herein referred to as *refl.*

The open loop pitch estimator **(208)** outputs a Normalized Auto-correlation Coefficient Function NACF) value, and NACF around pitch values, to speech classifier **(210).** The NACF parameter is hereinafter referred to as *nacf,* and the NACF around pitch parameter is hereinafter referred to as *nacf_at_pitch.* A more periodic speech signal produces a higher value of *nacf_at_pitch.* A higher value of *nacf_at_pitch* is more likely to be associated with a stationary voice output speech type. Speech classifier **(210)** maintains an array of *nacf_at_pitch* values. *nacf_at_pitch* is computed on a sub-frame basis. In an exemplary embodiment, two open loop pitch estimates are measured for each frame of output speech by measuring two sub-frames per frame. *nacf_at_pitch* is computed from the open loop pitch estimate for each sub-frame. In the exemplary embodiment, a five dimensional array of *nacf_at_pitch* values (i.e. *nacf_at_pitch*[5]) contains values for two and one-half frames of output speech. The *nacf_at_pitch* array is updated for each frame of output speech. The novel use of an array for the *nacf_at_pitch* parameter provides the speech classifier **(210)** with the ability to use current, past, and look ahead (future) signal information to make more accurate and robust speech mode decisions.

In addition to the information input to the speech classifier **(210)** from external components, the speech classifier **(210)** internally generates additional novel parameters from the output speech for use in the speech mode decision making process.

In one embodiment, the speech classifier **(210)** internally generates a zero crossing rate parameter, hereinafter referred to as *zcr.* The *zcr* parameter of the current output speech is defined as the number of sign changes in the speech signal per frame of speech. In voiced speech, the *zcr* value is low, while unvoiced speech (or noise) has a high *zcr* value because the signal is very random. The *zcr* parameter is used by the speech classifier (210) to classify voiced and unvoiced speech.

In one embodiment, the speech classifier **(210)** internally generates a current frame energy parameter, hereinafter referred to as *E*. *E* can be used by the speech classifier **(210)** to identify transient speech by comparing the energy in the current frame with energy in past and future frames. The parameter *vEprev* is the previous frame energy derived from E.

In one embodiment, the speech classifier **(210)** internally generates a look ahead frame energy parameter, hereinafter referred to as *Enext. Enext* may contain energy values from a portion of the current frame and a portion of the next frame of output speech. In one embodiment, *Enext* represents the energy in the second half of the current frame and the energy in the first half of the next frame of output speech. *Enext* is used by speech classifier **(210)** to identify transitional speech. At the end of speech, the energy of the next frame drops dramatically compared to the energy of the current frame. Speech classifier **(210)** can compare the energy of the current frame and the energy of the next frame to identify end of speech and beginning of speech conditions, or up transient and down transient speech modes.

In one embodiment, the speech classifier **(210)** internally generates a band energy ratio parameter, defined as log2(EL/EH), where EL is the low band current frame energy from 0 to 2 kHz, and EH is the high band current frame energy from 2 kHz to 4 kHz. The band energy ratio parameter is hereinafter referred to as *bER.* The *bER* parameter allows the speech classifier **(210)** to identify voiced speech and unvoiced speech modes, as in general, voiced speech concentrates energy in the low band, while noisy unvoiced speech concentrates energy in the high band.

In one embodiment, the speech classifier **(210)** internally generates a three-frame average voiced energy parameter from the output speech, hereinafter referred to as *vEav.* In other embodiments, *vEav* may be averaged over a number of frames other than three. If the current speech mode is active and voiced, *vEav* calculates a running average of the energy in the last three frames of output speech. Averaging the energy in the last three frames of output speech provides the speech classifier **(210)** with more stable statistics on which to base speech mode decisions than single frame energy calculations alone. *vEav* is used by the speech classifier **(210)** to classify end of voice speech, or down transient mode, as the current frame energy, *E*, will drop dramatically compared to average voice energy, *vEav,* when speech has stopped. *vEav* is updated only if the current frame is voiced, or reset to a fixed value for unvoiced or inactive speech. In one embodiment, the fixed reset value is .01.

In one embodiment, the speech classifier **(210)** internally generates a previous three frame average voiced energy parameter, hereinafter referred to as *vEprev.* In other embodiments, *vEprev* may be averaged over a number of frames other than three. *vEprev* is used by speech classifier **(210)** to identify transitional speech. At the beginning of speech, the energy of the current frame rises dramatically compared to the average energy of the previous three voiced frames. Speech classifier **(210)** can compare the energy of the current frame and the previous three frames to identify beginning of speech conditions, or up transient and speech modes. Similarly at the end of voiced speech, the energy of the current frame drops off dramatically. Thus, *vEprev* can also be used to classify transition at end of speech.

In one embodiment, the speech classifier **(210)** internally generates a current frame energy to previous three-frame average voiced energy ratio parameter, defined as 10*log10(*E*/*vEprev*). In other embodiments, *vEprev* may be averaged over a number of frames other than three. The current energy to previous three-frame average voiced energy ratio parameter is hereinafter referred to as *vER. vER* is used by the speech classifier **(210)** to classify start of voiced speech and end of voiced speech, or up transient mode and down transient mode, as *vER* is large when speech has started again and is small at the end of voiced speech. The *vER* parameter may be used in conjunction with the *vEprev* parameter in classifying transient speech.

In one embodiment, the speech classifier **(210)** internally generates a current frame energy to three-frame average voiced energy parameter, defined as MIN(20,10*log10(*E*/*vEav*)). The current frame energy to three-frame average voiced energy is hereinafter referred to as *vER*2. *vER*2 is used by the speech classifier **(210)** to classify transient voice modes at the end of voiced speech.

In one embodiment, the speech classifier **(210)** internally generates a maximum sub-frame energy index parameter. The speech classifier **(210)** evenly divides the current frame of output speech into sub-frames, and computes the Root Means Squared (RMS) energy value of each sub-frame. In one embodiment, the current frame is divided into ten sub-frames. The maximum sub-frame energy index parameter is the index to the sub-frame that has the largest RMS energy value in the current frame, or in the second half of the current frame. The max sub-frame energy index parameter is hereinafter referred to as *maxsfe_idx.* Dividing the current frame into sub-frames provides the speech classifier **(210)** with information about locations of peak energy, including the location of the largest peak energy, within a frame. More resolution is achieved by dividing a frame into more sub-frames. *maxsfe_idx* is used in conjunction with other parameters by the speech classifier **(210)** to classify transient speech modes, as the energies of unvoiced or silence speech modes are generally stable, while energy picks up or tapers off in a transient speech mode.

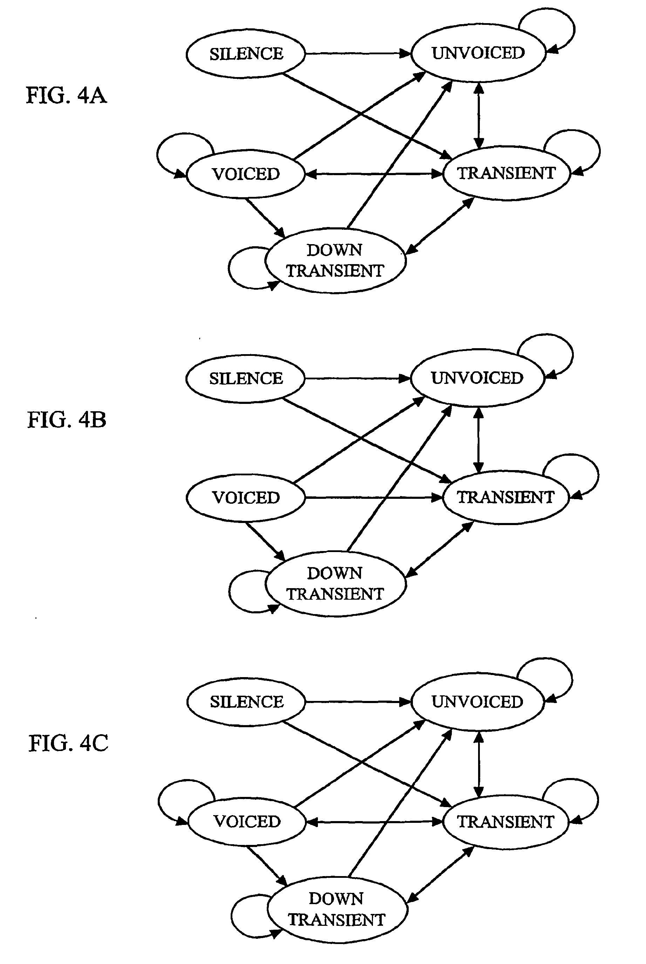

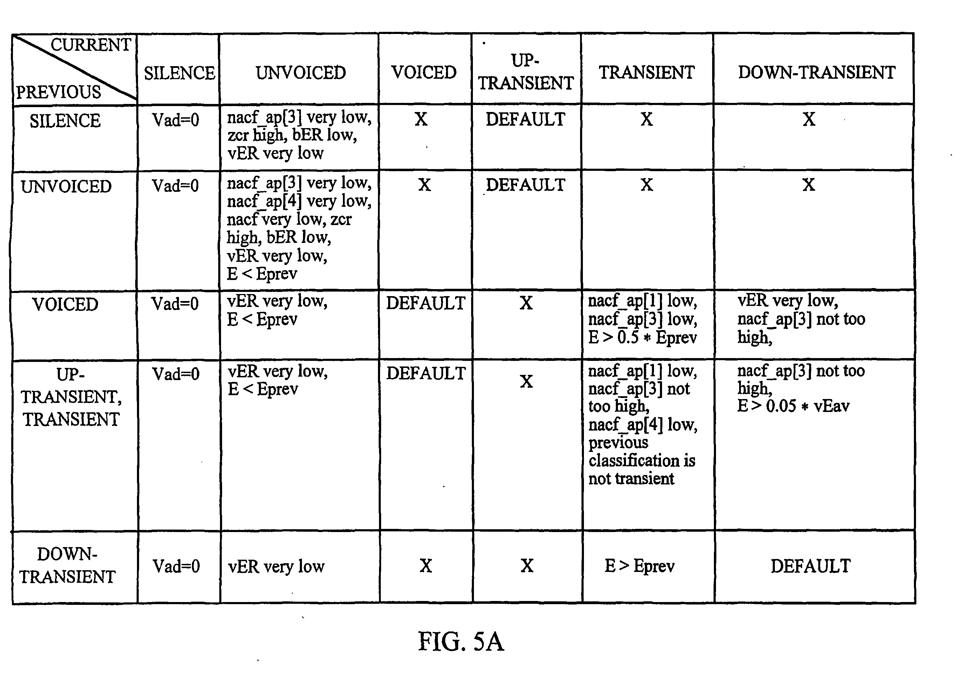

The speech classifier **(210)** uses novel parameters input directly from encoding components, and novel parameters generated internally, to more accurately and robustly classify modes of speech than previously possible. The speech Classifier **(210)** applies a novel decision making process to the directly input and internally generated parameters to produce improved speech classification results. The decision making process is described in detail below with references to FIGS. 4A - 4C and 5A - 5C.

In one embodiment, the speech modes output by speech Classifier **(210)** comprise: Transient, Up-Transient, Down-Transient, Voiced, Unvoiced, and Silence modes. Transient mode is a voiced but less periodic speech, optimally encoded with full rate CELP. Up-transient mode is the first voiced frame in active speech, optimally encoded with full rate CELP. Down-transient mode is low energy voiced speech typically at the end of a word, optimally encoded with half rate CELP. Voiced mode is a highly periodic voiced speech, comprising mainly vowels. Voiced mode speech may be encoded at full rate, half rate, quarter rate, or eighth rate. The data rate for encoding voiced mode speech is selected to meet Average Data Rate (ADR) requirements. Unvoiced mode, comprising mainly consonants, is optimally encoded with quarter rate Noise Excited Linear Prediction (NELP). Silence mode is inactive speech, optimally encoded with eighth rate CELP.

One skilled in the art would understand that the parameters and speech modes are not limited to the parameters and speech modes of the disclosed embodiments. Additional parameters and speech modes can be employed without departing from the scope of the disclosed embodiments.

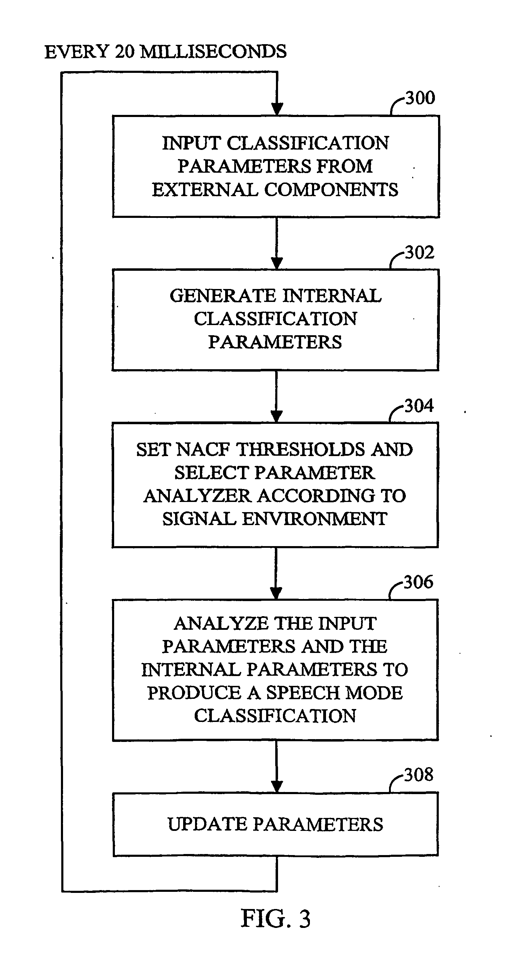

FIG. 3 is a flow chart illustrating one embodiment of the speech classification steps of a robust speech classification technique.

In step **300**, classification parameters input from external components are processed for each frame of noise suppressed output speech. In one embodiment, classification parameters input from external components comprise *curr_ns_snr* and t_in input from a noise suppresser component, *nacf* and *nacf_at_pitch* parameters input from an open loop pitch estimator component, *vad* input from a voice activity detector component, and *refl* input from an LPC analysis component. Control flow proceeds to step **302**.

In step **302**, additional internally generated parameters are computed from classification parameters input from external components. In an exemplary embodiment, *zcr, E, Enext, bER, vEav, vEprev, vER, vER2* and *maxsfe_idx* are computed from t_in. When internally generated parameters have been computed for each output speech frame, control flow proceeds to step **304**.

In step **304**, *NACF* thresholds are determined, and a parameter analyzer is selected according to the environment of the speech signal. In an exemplary embodiment, the *NACF* threshold is determined by comparing the *curr_ns_snr* parameter input in step **300** to a SNR threshold value. The *curr_ns_snr* information, derived from the noise suppressor, provides a novel adaptive control of a periodicity decision threshold. In this manner, different periodicity thresholds are applied in the classification process for speech signals with different levels of noise components. A more accurate speech classification decision is produced when the most appropriate *nacf,* or periodicity, threshold for the noise level of the speech signal is selected for each frame of output speech. Determining the most appropriate periodicity threshold for a speech signal allows the selection of the best parameter analyzer for the speech signal.

Clean and noisy speech signals inherently differ in periodicity. When noise is present, speech corruption is present. When speech corruption is present, the measure of the periodicity, or *nacf,* is lower than that of clean speech. Thus, the *nacf* threshold is lowered to compensate for a noisy signal environment or raised for a clean signal environment. The novel speech classification technique of the disclosed embodiments does not fix periodicity thresholds for all environments, producing a more accurate and robust mode decision regardless of noise levels.

In an exemplary embodiment, if the value of *curr_ns_snr* is greater than or equal to a SNR threshold of 25 db, *nacf* thresholds for clean speech are applied. Exemplary *nacf* thresholds for clean speech are defined by the following table:

| Threshold for Type | Threshold Name | Threshold Value |
|---|---|---|
| Voiced | VOICEDTH | .75 |
| Transitional | LOWVOICEDTH | .5 |
| Unvoiced | UNVOICEDTH | .35 |

### Table 1

In the exemplary embodiment, if the value of *curr_ns_snr* is less than a SNR threshold of 25 db, *nacf* thresholds for noisy speech are applied. Exemplary *nacf* thresholds for noisy speech are defined by the following table:

| Threshold for Type | Threshold Name | Threshold Value |
|---|---|---|
| Voiced | VOICEDTH | .65 |
| Transitional | LOWVOICEDTH | .5 |
| Unvoiced | UNVOICEDTH | .35 |

### Table 2

Noisy speech is the same as clean speech with added noise. With adaptive periodicity threshold control, the robust speech classification technique is more likely to produce identical classification decisions for clean and noisy speech than previously possible. When the *nacf* thresholds have been set for each frame, control flow proceeds to step **306.**

In step **306**, the parameters input from external components and the internally generated parameters are analyzed to produce a speech mode classification. A state machine or any other method of analysis selected according to the signal environment is applied to the parameters. In an exemplary embodiment, the parameters input from external components and the internally generated parameters are applied to a state based mode decision making process described in detail with reference to FIGS. 4A - 4C and 5A - 5C. The decision making process produces a speech mode classification. In an exemplary embodiment, a speech mode classification of Transient, Up-Transient, Down Transient, Voiced, Unvoiced, or Silence is produced. When a speech mode decision has been produced, control flow proceeds to step **308**.

In step **308**, state variables and various parameters are updated to include the current frame. In an exemplary embodiment, *vEav, vEprev,* and the voiced state of the current frame are updated. The current frame energy *E*, *nacf_at_pitch,* and the current frame speech mode are updated for classifying the next frame.

Steps **300 - 308** are repeated for each frame of speech.

FIGS. 4A - 4C illustrate embodiments of the mode decision making processes of an exemplary embodiment of a robust speech classification technique. The decision making process selects a state machine for speech classification based on the periodicity of the speech frame. For each frame of speech, a state machine most compatible with the periodicity, or noise component, of the speech frame is selected for the decision making process by comparing the speech frame periodicity measure, i.e. *nacf_at_pitch* value, to the *NACF* thresholds set in step **304** of FIG. 3. The level of periodicity of the speech frame limits and controls the state transitions of the mode decision process, producing a more robust classification.

FIG. 4A illustrates one embodiment of the state machine selected in the exemplary embodiment when *vad* is 1 (there is active speech) and the third value of *nacf_at_pitch* (i.e. *nacf_at_pitch*[2], zero indexed) is very high, or greater than VOICEDTH. VOICEDTH is defined in step **304** of FIG. 3. FIG. 5A illustrates the parameters evaluated by each state.

The initial state is silence. The current frame will always be classified as Silence, regardless of the previous state, if *vad* = 0 (i.e there is no voice activity).

When the previous state is silence, the current frame may be classified as either Unvoiced or Up-transient. The current frame is classified as Unvoiced if *nacf_at_pitch*[3] is very low, *zcr* is high, *bER* is low and *vER* is very low, or if a combination of these conditions are met. Otherwise the classification defaults to Up-Transient.

When the previous state is Unvoiced, the current frame may be classified as Unvoiced or Up-Transient. The current frame remains classified as Unvoiced if *nacf* is very low, , *nacf_at_pitch*[3] is very low, *nacf_at_pitch*[4] is very low, *zcr* is high, *bER* is low, *vER* is very low, and E is less than *vEprev,* or if a combination of these conditions are met. Otherwise the classification defaults to Up-Transient.

When the previous state is Voiced, the current frame may be classified as Unvoiced, Transient, Down-Transient, or Voiced. The current frame is classified as Unvoiced if *vER* is very low, and E is less than *vEprev.* The current frame is classified as Transient if *nacf_at_pitch*[1] and *nacf_at_pitch*[3] are low, E is greater than half of *vEprev,* or a combination of these conditions are met. The current frame is classified as Down-Transient if *vER* is very low, and *nacf_at_pitch*[3] has a moderate value. Otherwise, the current classification defaults to Voiced.

When the previous state is Transient or Up-Transient, the current frame may be classified as Unvoiced, Transient, Down-Transient or Voiced. The current frame is classified as Unvoiced if *vER* is very low, and E is less than *vEprev.* The current frame is classified as Transient if *nacf_at_pitch*[1] is low, *nacf_at_pitch*[3] has a moderate value, *nacf_at_pitch*[4] is low, and the previous state is not Transient, or if a combination of these conditions are met. The current frame is classified as Down-Transient if *nacf_at _pitch*[3] has a moderate value, and *E* is less than .05 times *vEav.* Otherwise, the current classification defaults to Voiced.

When the previous frame is Down-Transient, the current frame may be classified as Unvoiced, Transient or Down-Transient. The current frame will be classified as Unvoiced if *vER* is very low. The current frame will be classified as Transient if *E* is greater than *vEprev.* Otherwise, the current classification remains Down-Transient.

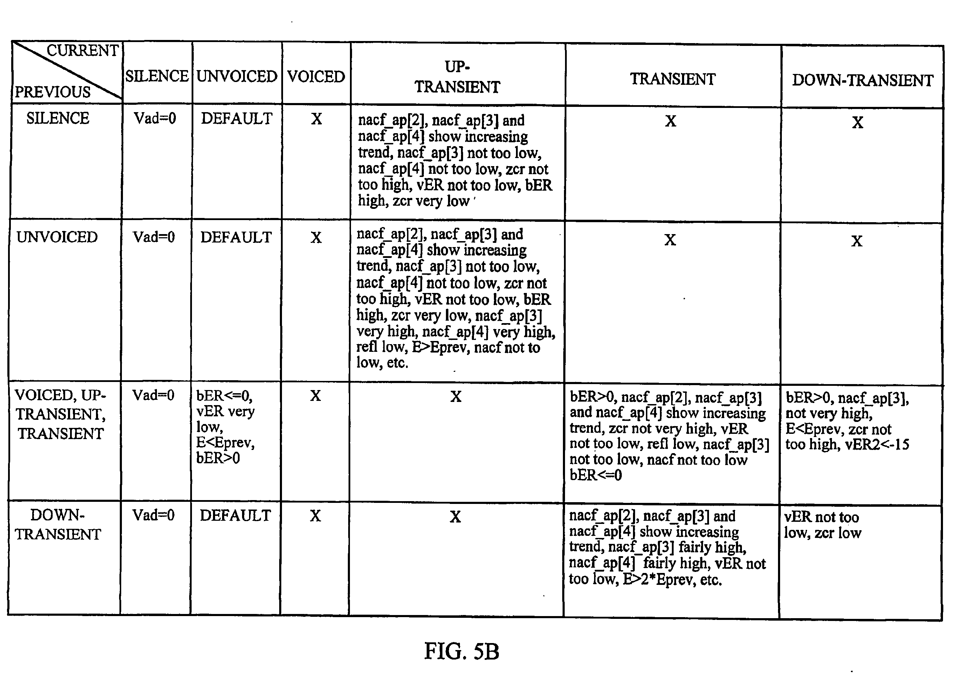

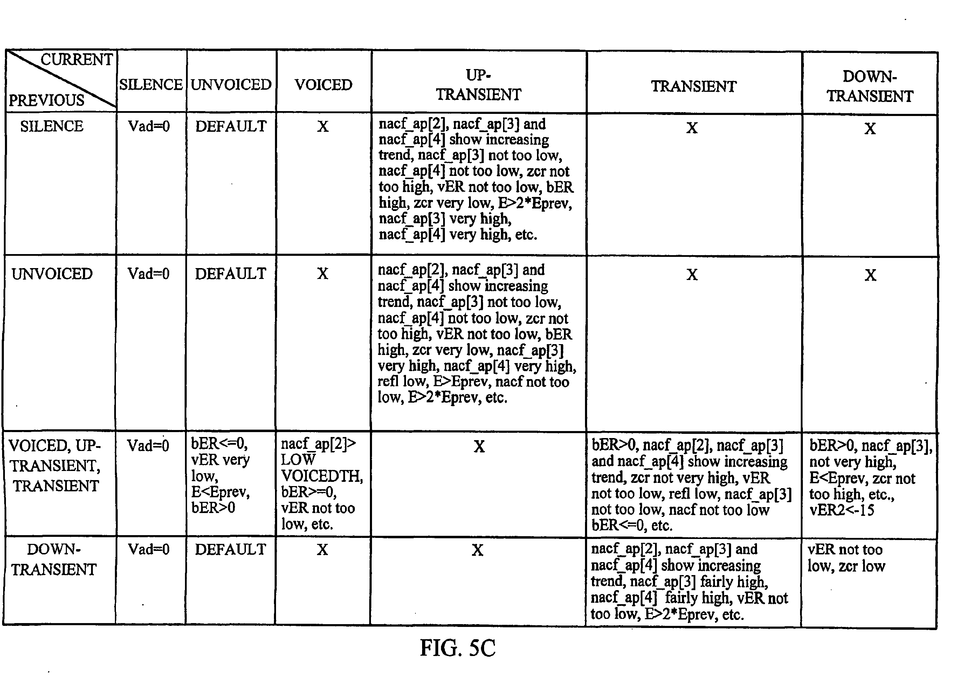

FIG. 4B illustrates one embodiment of the state machine selected in the exemplary embodiment when *vad* is 1 (there is active speech) and the third value of *nacf_at_pitch* is very low, or less than UNVOICEDTH. UNVOICEDTH is defined in step **304** of FIG. 3. FIG. 5B illustrates the parameters evaluated by each state.

The initial state is silence. The current frame will always be classified as Silence, regardless of the previous state, if *vad =* 0 (i.e there is no voice activity).

When the previous state is silence, the current frame may be classified as either Unvoiced or Up-transient. The current frame is classified as Up-Transient if *nacf_at_pitch*[2-4] show an increasing trend, *nacf_at_pitch*[3-4] have a moderate value, *zcr* is very low to moderate, *bER* is high, and *vER* has a moderate value, or if a combination of these conditions are met. Otherwise the classification defaults to Unvoiced.

When the previous state is Unvoiced, the current frame may be classified as Unvoiced or Up-Transient. The current frame is classified as Up-Transient if *nacf_at_pitch*[2-4] show an increasing trend, *nacf_at_pitch*[3-4] have a moderate to very high value, *zcr* is very low or oderste, *vER* is not low, *bER* is high, *refl* is low, *nacf* has moderate value and *E* is greater than *vEprev,* or if a combination of these conditions is met. The combinations and thresholds for these conditions may vary depending on the noise level of the speech frame as *refl*ected in the parameter *curr_ns_snr.* Otherwise the classification defaults to Unvoiced.

When the previous state is Voiced, Up-Transient, or Transient, the current frame may be classified as Unvoiced, Transient, or Down-Transient. The current frame is classified as Unvoiced if *bER* is less than or eqaul to zero, *vER* is very low, *bER* is greater than zero, and *E* is less than *vEprev,* or if a combination of these conditions are met. The current frame is classified as Transient if *bER* is greater than zero, *nacf_at_pitch*[2-4] show an increasing trend, *zcr* is not high, *vER* is not low, *refl* is low, *nacf_at_pitch*[3] and *nacf* are moderate and *bER* is less than or equal to zero, or if a certain combination of these conditions are met. The combinations and thresholds for these conditions may vary depending on the noise level of the speech frame as *refl*ected in the parameter *curr_ns_snr.* The current frame is classified as Down-Transient if, *bER* is greater than zero, *nacf_at_pitch*[3] is moderate, *E* is less than *vEprev, zcr* is not high, and *vER2* is less then negative fifteen.

When the previous frame is Down-Transient, the current frame may be classified as Unvoiced, Transient or Down-Transient. The current frame will be classified as Transient if *nacf_at_pitch*[2-4] shown an increasing trend, *nacf_at_pitch*[3-4] are moderately high, *vER* is not low, and E is greater than twice *vEprev,* or if a combination of these conditions are met. The current frame will be classified as -Down-Transient if *vER* is not low and *zcr* is low. Otherwise, the current classification defaults to Unvoiced.

FIG. 4C illustrates one embodiment of the state machine selected in the exemplary embodiment when *vad* is 1 (there is active speech) and the third value of *nacf_at_pitch* (i.e. *nacf_at_pitch*[3]) is moderate, i.e., greater than UNVOICEDTH and less than VOICEDTH. UNVOICEDTH and VOICEDTH are defined in step **304** of FIG. 3. FIG. 5C illustrates the parameters evaluated by each state.

The initial state is silence. The current frame will always be classified as Silence, regardless of the previous state, if *vad =* 0 (i.e there is no voice activity).

When the previous state is silence, the current frame may be classified as either Unvoiced or Up-transient. The current frame is classified as Up-Transient if *nacf_at_pitch*[2-4] shows an increasing trend, *nacf_at_pitch*[3-4] are moderate to high, *zcr* is not high, *bER* is high, *vER* has a moderate value, *zcr* is very low and *E* is greater than twice *vEprev,* or if a certain combination of these conditions are met. Otherwise the classification defaults to Unvoiced.

When the previous state is Unvoiced, the current frame may be classified as Unvoiced or Up-Transient. The current frame is classified as Up-Transient if *nacf_at_pitch*[2-4] shows an increasing trend, *nacf_at_pitch*[3-4] have a moderate to very high value, *zcr* is not high, *vER* is not low, *bER* is high, *refl* is low, *E* is greater than *vEprev, zcr* is very low, *nacf* is not low, *maxsfe_idx* points to the last subframe and *E* is greater than twice *vEprev,* or if a combination of these conditions are met. The combinations and thresholds for these conditions may vary depending on the noise level of the speech frame as *refl*ected in the parameter *curr_ns_snr.* Otherwise the classification defaults to Unvoiced.

When the previous state is Voiced, Up-Transient, or Transient, the current frame may be classified as Unvoiced, Voiced, Transient, Down-Transient. The current frame is classified as Unvoiced if *bER* is less than or eqaul to zero, *vER* is very low, *Enext* is less than *E, nacf_at_pitch*[3-4] are very low, *bER* is greater than zero and *E* is less than *vEprev,* or if a certain combination of these conditions are met. The current frame is classified as Transient if *bER* is greater than zero, *nacf_at_pitch*[2-4] show an increasing trend, *zcr* is not high, *vER* is not low, *refl* is low, *nacf_at_pitch*[3] and *nacf* are not low, or if a combination of these conditions are met. The combinations and thresholds for these conditions may vary depending on the noise level of the speech frame as *refl*ected in the parameter *curr_ns_snr.* The current frame is classified as Down-Transient if, *bER* is greater than zero, *nacf_at_pitch*[3] is not high, *E* is less than *vEprev, zcr* is not high, *vER* is less than negative fifteen and *vER2* is less then negative fifteen, or if a combination of these conditions are met.. The current frame is classified as Voiced if *nacf_at_pitch*[2] is greater than LOWVOICEDTH, *bER* is greater than or equal to zero, and *vER* is not low, or if a combination of these conditions are met.

When the previous frame is Down-Transient, the current frame may be classified as Unvoiced, Transient or Down-Transient. The current frame will be classified as Transient if *bER* is greater than zero, *nacf_at_pitch*[2-4] show an increasing trend, *nacf_at_pitch*[3-4] are moderately high, *vER* is not low, and *E* is greater than twice *vEprev,* or if a certain combination of these conditions are met. The current frame will be classified as Down-Transient if *vER* is not low and *zcr* is low. Otherwise, the current classification defaults to Unvoiced.

FIG. 5A - 5C are embodiments of decision tables used by the disclosed embodiments for speech classification.

FIG. 5A, in accordance with one embodiment, illustrates the parameters evaluated by each state, and the state transitions when the third value of *nacf_at_pitch* (i.e. *nacf_at_pitch*[2]) is very high, or greater than VOICEDTH. The decision table illustrated in FIG. 5A is used by the state machine described in FIG. 4A. The speech mode classification of the previous frame of speech is shown in the leftmost column. When parameters are valued as shown in the row associated with each previous mode, the speech mode classification transitions to the current mode identified in the top row of the associated column.

FIG. 5B illustrates, in accordance with one embodiment, the parameters evaluated by each state, and the state transitions when the third value (i.e. *nacf_at_pitch*[2]) i*s* very low, or less than UNVOICEDTH. The decision table illustrated in FIG. 5B is used by the state machine described in FIG. 4B. The speech mode classification of the previous frame of speech is shown in the leftmost column. When parameters are valued as shown in the row associated with each previous mode, the speech mode classification transitions to the current mode identified in the top row of the associated column.

FIG. 5C illustrates, in accordance with one embodiment, the parameters evaluated by each state, and the state transitions when the third value of *nacf_at_pitch* (i.e. *nacf_at_pitch*[3]) is moderate, i.e., greater than UNVOICEDTH but less than VOICEDTH. The decision table illustrated in FIG. 5C is used by the state machine described in FIG. 4C. The speech mode classification of the previous frame of speech is shown in the leftmost column. When parameters are valued as shown in the row associated with each previous mode, the speech mode classification transitions to the current mode identified in the top row of the associated column.

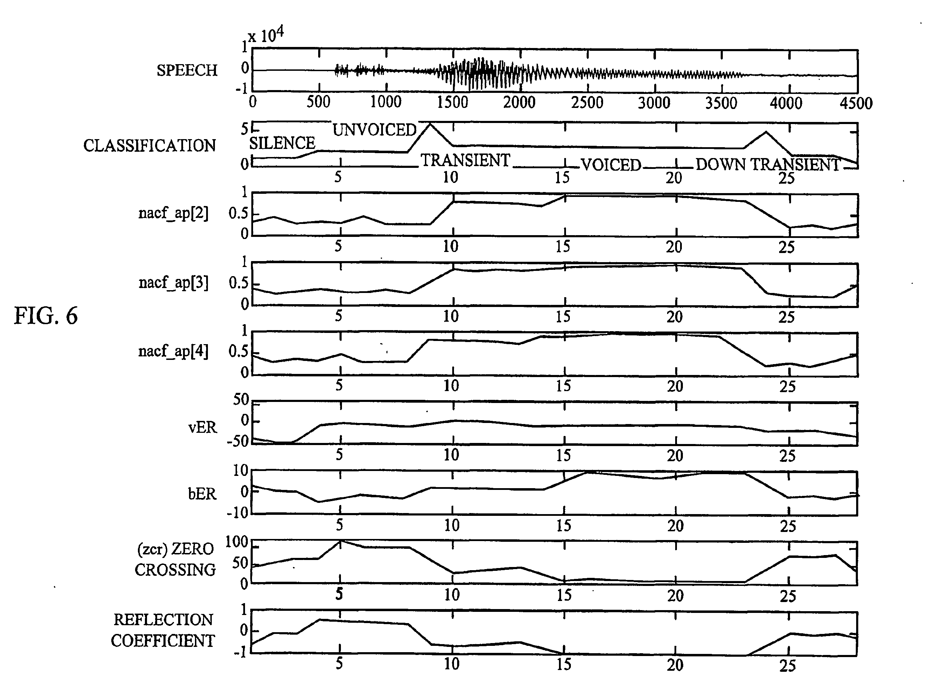

FIG. 6 is a timeline graph of an exemplary embodiment of a speech signal with associated parameter values, and speech classifications.

It is understood by those of skill in the art that speech classifiers may be implemented with a DSP, an ASIC, discrete gate logic, firmware, or any conventional programmable software module and a microprocessor. The software module could reside in RAM memory, flash memory, registers, or any other form of writeable storage medium known in the art. Alternatively, any conventional processor, controller, or state machine could be substituted for the microprocessor.

The previous description of the preferred embodiments is provided to enable any person skilled in the art to make or use the present invention. The various modifications to these embodiments will be readily apparent to those skilled in the art. Thus, the present invention is not intended to be limited to the embodiments shown herein but is to be accorded the widest scope defined by the appended claims.

## Claims

1. A method of speech classification, comprising:
generating Signal to Noise Ratio, further referred to as SNR, information for a speech signal;
generating classification parameters from the speech signal, including a Normalised Auto-Correlation Coefficient Function, further referred to as NACF;
comparing the SNR information to a SNR threshold value;
setting a NACF threshold according to the results of the comparison step and using said threshold for selecting a parameter analyser; and
analysing the classification parameters according to the selected analyser to produce a speech mode classification.

2. The method of claim 1, wherein the speech signal is a noise suppressed speech signal.

3. The method of claim 2, wherein the SNR information is for the noise suppressed speech signal.

4. The method of claim 1, wherein the classification parameters comprise voice activity information.

5. The method of claim 1, wherein the classification parameters comprise Linear Prediction reflection coefficients.

6. The method of claim 1, wherein the classification parameters comprise Normalized Auto-correlation Coefficient Function at pitch information.

7. A speech classifier, comprising:
means for generating Signal to Noise Ratio, further referred to as SNR, information for a speech signal;
a generator for generating classification parameters from the speech signal, including a Normalised Auto-Correlation Coefficient Function, further referred to as NACF;
means for comparing the SNR information to a SNR threshold; and
a NACF threshold generator for setting a NACF threshold according to the results of the comparison and operable to use the NACF threshold for selecting a parameter analyser, wherein:
the selected parameter analyser is adapted to analyse the classification parameters to produce a speech mode classification.

8. The speech classifier of claim 7, wherein the speech signal is a noise suppressed speech signal.

9. The speech classifier of claim 7, wherein the generator for generating classification parameters is operable to generate parameters from the Signal to Noise Ratio information.

10. The speech classifier of claim 7, wherein the generator for generating classification parameters is operable to generate parameters from voice activity information.

11. The speech classifier of claim 7, wherein the generator for generating classification parameters is operable to generate parameters from Linear Prediction reflection coefficients.

12. The speech classifier of claim 7, wherein the generator for generating classification parameters is operable to generate parameters from NACF information.

13. The speech classifier of claim 7, wherein the generator for generating classification parameters is operable to generate parameters from NACF at pitch information.

14. The method of claim 6 or the speech classifier of claim 13, wherein the NACF at pitch information is an array of values.

15. The method of claim 1 or the speech classifier of claim 7, wherein the generated parameters comprise a zero crossing rate parameter.

16. The method of claim 1 or the speech classifier of claim 7, wherein the generated parameters comprise a current frame energy parameter.

17. The method of claim 1 or the speech classifier of claim 7, wherein the generated parameters comprise a look ahead frame energy parameter.

18. The method of claim 1 or the speech classifier of claim 7, wherein the generated parameters comprise a band energy ratio parameter.

19. The method of claim 1 or the speech classifier of claim 7, wherein the generated parameters comprise a three frame averaged voiced energy parameter.

20. The method of claim 1 or the speech classifier of claim 7, wherein the generated parameters comprise a previous three frame average voiced energy parameter.

21. The method of claim 1 or the speech classifier of claim 7, wherein the generated parameters comprise a current frame energy to previous three frame average voiced energy ratio parameter.

22. The method of claim 1 or the speech classifier of claim 7, wherein the generated parameters comprise a current frame energy to three frame average voiced energy parameter.

23. The method of claim 1 or the speech classifier of claim 7, wherein the generated parameters comprise a maximum sub-frame energy index parameter.

24. The method of claim 1 or the speech classifier of claim 7, wherein the analysing comprises applying the parameters to a state machine.

25. The method or the speech classifier of claim 24, wherein the state machine comprises a state for each speech classification mode.

26. The method of claim 1 or the speech classifier of claim 7, wherein the speech mode classification comprises a Transient mode.

27. The method of claim 1 or the speech classifier of claim 7, wherein the speech mode classification comprises an Up-Transient mode.

28. The method of claim 1 or the speech classifier of claim 7, wherein the speech mode classification comprises a Down-Transient mode.

29. The method of claim 1 or the speech classifier of claim 7, wherein the speech mode classification comprises a Voiced mode.

30. The method of claim 1 or the speech classifier of claim 7, wherein the speech mode classification comprises an Unvoiced mode.

31. The method of claim 1 or the speech classifier of claim 7, wherein the speech mode classification comprises a Silence mode.

32. The method of claim 1 or the speech classifier of claim 7, further comprising updating at least one parameter.

33. The method or speech classifier of claim 32, wherein the updated parameter comprises a NACF at pitch parameter.

34. The method or speech classifier of claim 32, wherein the updated parameter comprises a three frame averaged voiced energy parameter.

35. The method or speech classifier of claim 32, wherein the updated parameter comprises a look ahead frame energy parameter.

36. The method or speech classifier of claim 32, wherein the updated parameter comprises a previous three frame average voiced energy parameter.

37. The method or speech classifier of claim 32, wherein the updated parameter comprises a voice activity detection parameter.

## Patentansprüche

1. Ein Verfahren zur Sprachklassifikation, das Folgendes aufweist:
Generieren von Informationen hinsichtlich eines Signal-zu-Rausch-Verhältnisses, was im Folgenden als SNR (Signal to Noise Ratio) bezeichnet wird, für ein Sprachsignal;
Generieren von Klassifikationsparametern aus dem Sprachsignal inklusive einer normalisierten Auto-Korrelations-Koeffizients-Funktion auf die im Folgenden als NACF (Normalised Auto-Correlation Coefficient Function) Bezug genommen wird;
Vergleichen der SNR-Information mit einem SNR-Schwellenwert;
Einstellen einer NACF-Schwelle, gemäß den Ergebnissen des Vergleichsschrittes und Verwenden der Schwelle zum Auswählen eines Parameter-Analysierers; und
Analysieren der Klassifikationsparamater gemäß dem ausgewählten Analysierer, um eine Sprachmodusklassifikation zu erzeugen.

2. Verfahren nach Anspruch 1, wobei das Sprachsignal ein rauschunterdrücktes Sprachsignal ist.

3. Verfahren nach Anspruch 2, wobei die SNR-Information für das rauschunterdrückte Sprachsignal gilt.

4. Verfahren nach Anspruch 1, wobei die Klassifikationsparameter Stimmaktivitätsinformation aufweist.

5. Verfahren nach Anspruch 1, wobei die Klassifikationsparameter Linear-Prädiktions-Reflextions-Koeffizienten aufweisen.

6. Verfahren nach Anspruch 1, wobei die Klassifikationsparameter eine normalisierte Auto-Korrelations-Koeffizients-Funktion mit Pitch- bzw. Tonlageinformation aufweist.

7. Ein Sprachklassifizierer, der Folgendes aufweist:
Mittel zum Generieren von Information hinsichtlich eines Signal-zu-Rausch-Verhältnisses, worauf im Folgenden als SNR Bezug genommen wird, für ein Sprachsignal;
ein Generator zum Generieren von Klassifikationsparametern aus dem Sprachsignal, inklusive einer normalisierten Auto-Korrelations-Koeffizients-Funktion, auf die im Folgenden als NACF Bezug genommen wird;
Mittel zum Vergleichen der SNR-Information mit einer SNR-Schwelle; und
ein NACF-Schwellengenerator zum Einstellen einer NACF-Schwelle gemäß den Ergebnissen des Vergleichens und betriebsmäßig die NACF-Schwelle verwendet für das Auswählen eines Parameter-Analysierers, wobei:
der ausgewählte Parameter-Analysierer angepasst ist zum Analysieren der Klassifikationsparameter, um eine Sprachmodusklassifikation zu Erzeugen.

8. Sprachklassifizierer nach Anspruch 7, wobei das Sprachsignal ein rauschunterdrücktes Sprachsignal ist.

9. Sprachklassifizierer nach Anspruch 7, wobei der Generator zum Generieren von Klassifikationsparametern operiert, um Parameter aus der Signal-zu-Rausch-Verhältnis-Information zu generieren.

10. Sprachklassifizierer nach Anspruch 7, wobei der Generator zum Generieren von Klassifikationsparametern operiert, um Parameter von Stimmaktivitätsinformation zu generieren.

11. Sprachklassifizierer nach Anspruch 7, wobei der Generator zum Generieren von Klassifikationsparametern operiert, um Parameter von Linear-Prädiktions-Reflektions-Koeffizienten zu generieren.

12. Sprachklassifizierer nach Anspruch 7, wobei der Generator zum Generieren von Klassifikationsparametern operiert, um Parameter von NACF-Information zu generieren.

13. Sprachklassifizierer nach Anspruch 7, wobei der Generator zum Generieren von Klassifikationsparametern operiert, um Parameter von NACF mit Pitch-Information zu generieren.

14. Verfahren nach Anspruch 6 oder der Sprachklassifizierer nach Anspruch 13, wobei die NACF mit Pitch-Information ein Array von Werten ist.

15. Verfahren nach Anspruch 1 oder Sprachklassifizierer nach Anspruch 7, wobei die generierten Parameter einen Null-Durchgangs-Raten-Parameter aufweisen.

16. Verfahren nach Anspruch 1 oder Sprachklassifizerer nach Anspruch 7, wobei die generierten Parameter einen Parameter hinsichtlich der momentanen Rahmenenergie aufweisen.

17. Verfahren nach Anspruch 1 oder Sprachklassifizerer nach Anspruch 7, wobei die generierten Parameter einen vorausschauenden (look ahead) Rahmenenergieparameter aufweisen.

18. Verfahren nach Anspruch 1 oder Sprachklassifizerer nach Anspruch 7, wobei die generierten Parameter einen Band-Energie-Verhältnis-Parameter aufweisen.

19. Verfahren nach Anspruch 1 oder der Sprachklassifizierer nach Anspruch 7, wobei die generierten Parameter einen über drei Rahmen gemittelten sprachbehafteten Energieparameter aufweisen.

20. Verfahren nach Anspruch 1 oder Sprachklassifizerer nach Anspruch 7, wobei die generierten Parameter einen über die vorhergehenden drei Rahmen gemittelten sprachbehafteten Energieparameter aufweisen.

21. Verfahren nach Anspruch 1 oder Sprachklassifizerer nach Anspruch 7, wobei die generierten Parameter einen Parameter hinsichtlich des Verhältnisses einer momentanen Rahmenenergie zu der, über die vorhergehenden drei Rahmen gemittelten sprachbehafteten Energie, aufweist.

22. Verfahren nach Anspruch 1 oder Sprachklassifizerer nach Anspruch 7, wobei die generierten Parameter einen Parameter hinsichtlich der momentanen Rahmenenergie verglichen zu der über drei Rahmen gemittelten sprachbehafteten Energie aufweist.

23. Verfahren nach Anspruch 1 oder Sprachklassifizerer nach Anspruch 7, wobei die generierten Parameter einen Parameter hinsichtlich eines Maximum-Unterrahmen-Energie-Indexes aufweist.

24. Verfahren nach Anspruch 1 oder Sprachklassifizierer nach Anspruch 7, wobei das Analysieren das Anwenden der Parameter auf eine Zustandsmaschine aufweist.

25. Verfahren nach Anspruch 1 oder Sprachklassifizierer nach Anspruch 24, wobei die Zustandsmaschine einen Zustand für jeden Sprachklassifikationsmodus aufweist.

26. Verfahren nach Anspruch 1 oder der Sprachklassifizerer nach Anspruch 7, wobei die Sprachmodusklassifikation einen transienten Modus aufweist.

27. Verfahren nach Anspruch 1 oder der Sprachklassifizerer nach Anspruch 7, wobei die Sprachmodusklassifikation einen hoch-transienten Modus aufweist.

28. Verfahren nach Anspruch 1 oder der Sprachklassifizerer nach Anspruch 7, wobei die Sprachmodusklassifikation einen tief-transienten Modus aufweist.

29. Verfahren nach Anspruch 1 oder der Sprachklassifizerer nach Anspruch 7, wobei die Sprachmodusklassifikation einen stimmbehafteten bzw. voiced Modus aufweist.

30. Verfahren nach Anspruch 1 oder der Sprachklassifizerer nach Anspruch 7, wobei die Sprachmodusklassifikation einen stimmlosen bzw. unvoiced Modus aufweist.

31. Verfahren nach Anspruch 1 oder der Sprachklassifizerer nach Anspruch 7, wobei die Sprachmodusklassifikation einen Stille-Modus aufweist.

32. Verfahren nach Anspruch 1 oder der Sprachklassifizerer nach Anspruch 7, der weiterhin das Aktualisieren von zumindest einen Parameter aufweist.

33. Verfahren nach Anspruch 1 oder der Sprachklassifizerer nach Anspruch 32, wobei der aktualisierte Parameter eine NACF mit Pitch-Parameter aufweist.

34. Verfahren oder Sprachklassifizerer nach Anspruch 32, wobei der aktualisierte Parameter einen Parameter hinsichtlich einer über drei Rahmen gemittelten stimmbehafteten Energie aufweist.

35. Verfahren oder Sprachklassifizierer nach Anspruch 32, wobei der aktualisierte Parameter einen Vorausschau-Rahmenenergie-Parameter aufweist.

36. Verfahren oder Sprachklassifizierer nach Anspruch 32, wobei der aktualisierte Parameter einen Parameter hinsichtlich einer über die vorhergehenden drei Rahmen gemittelten stimmbehafteten Energie aufweist.

37. Verfahren oder Sprachklassifizierer nach Anspruch 32, wobei der aktualisierte Parameter einen Stimmaktivitäts-Detektierungs-Parameter aufweist.

## Revendications

1. Procédé de classification vocale, comprenant:
générer une information de rapport signal bruit, aussi appelé RSB, pour un signal vocal ;
générer des paramètres de classification à partir du signal vocal, comprenant une fonction de coefficient d'autocorrélation normalisée, aussi appelée FCAN ;
comparer l'information de RSB à une valeur de seuil de RSB ;
régler un seuil de FCAN en fonction des résultats de l'étape de comparaison et utiliser ledit seuil pour sélectionner une analyseur de paramètres ; et
Analyser les paramètres de classification en fonction de l'analyseur sélectionné pour produire une classification de mode vocal.

2. Procédé selon la revendication 1, dans lequel le signal vocal est un signal vocal dans lequel le bruit a été supprimé.

3. Procédé selon la revendication 2, dans lequel l'information de RSB est pour le signal dans lequel le bruit a été supprimé:

4. Procédé selon la revendication 1, dans lequel les paramètres de classification comprennent une information d'activité vocale.

5. Procédé selon la revendication 1, dans lequel les paramètres de classification comprennent des coefficients de réflexion de prédiction linéaire.

6. Procédé selon la revendication 1, dans lequel les paramètres de classification comprennent une fonction de coefficient d'autocorrélation normalisée au niveau d'une information de hauteur sonore.

7. Classificateur vocal, comprenant :
des moyens pour générer une information de rapport signal bruit, aussi appelé RSB, pour un signal vocal ;
un générateur pour générer des paramètres de classification à partir du signal vocal, comprenant une fonction de coefficient d'autocorrélation normalisée, aussi appelée FCAN ;
des moyens pour comparer l'information de RSB à un seuil de RSB ;
un générateur de seuil de FACN pour établir un seuil de FCAN en fonction des résultats de la comparaison et utiliser ledit seuil de FACN pour sélectionner un analyseur de paramètres, dans lequel :
L'analyseur de paramètres sélectionné est adapté pour analyser les paramètres de classification pour produire une classification de mode vocal.

8. Classificateur vocal selon la revendication 7, dans lequel le signal vocal est un signal dans lequel le bruit a été supprimé.

9. Classificateur vocal selon la revendication 7, dans lequel le générateur pour générer des paramètres de classification peut fonctionner pour générer des paramètres à partir de l'information de rapport signal bruit.

10. Classificateur vocal selon la revendication 7, dans lequel le générateur pour générer des paramètres de classification peut fonctionner pour générer des paramètres à partir de l'information d'activité vocale.

11. Classificateur vocal selon la revendication 7, dans lequel le générateur pour générer des paramètres de classification peut fonctionner pour générer des paramètres à partir des coefficients de réflexion de prédiction linéaire.

12. Classificateur vocal selon la revendication 7, dans lequel le générateur pour générer des paramètres de classification peut fonctionner pour générer des paramètres à partir de l'information de FCAN.

13. Classificateur vocal selon la revendication 7, dans lequel le générateur pour générer des paramètres de classification peut fonctionner pour générer des paramètres à partir de l'information de FCAN au niveau d'une information de hauteur vocale.

14. Procédé selon la revendication 6 ou classificateur vocal selon la revendication 13, dans lequel la FCAN au niveau de l'information de hauteur vocale est un tableau de valeurs.

15. Procédé de la revendication 1 ou classificateur vocal de la revendication 7, dans lequel les paramètres générés comprennent un paramètre de taux de passage par zéro.

16. Procédé de la revendication 1 ou classificateur vocal de la revendication 7, dans lequel les paramètres générés comprennent une paramètre d'énergie de trame courante.

17. Procédé de la revendication 1 ou classificateur vocal de la revendication 7, dans lequel les paramètres générés comprennent un paramètre d'énergie de trame anticipé.

18. Procédé de la revendication 1 ou classificateur vocal de la revendication 7, dans lequel les paramètres générés comprennent un paramètre de taux d'énergie de bande.

19. Procédé de la revendication 1 ou classificateur vocal de la revendication 7, dans lequel les paramètres générés comprennent un paramètre d'énergie vocalisée moyenne sur trois trames.

20. Procédé de la revendication 1 ou classificateur vocal de la revendication 7, dans lequel les paramètres générés comprennent un paramètre d'énergie vocalisée moyenne sur trois trames précédente.

21. Procédé de la revendication 1 ou classificateur vocal de la revendication 7, dans lequel les paramètres générés comprennent un paramètre de rapport d'énergie de trame courante à énergie vocalisée moyenne sur trois trame précédente.

22. Procédé de la revendication 1 ou classificateur vocal de la revendication 7, dans lequel les paramètres générés comprennent un paramètre d'énergie de trame courante à énergie vocalisée moyenne sur trois trame.

23. Procédé de la revendication 1 ou classificateur vocal de la revendication 7, dans lequel les paramètres générés comprennent un paramètre d'indice d'énergie de sous-trame maximal.

24. Procédé de la revendication 1 ou classificateur vocal de la revendication 7, dans lequel l'analyse comprend l'application de paramètres à une machine à états.

25. Procédé ou classificateur vocal de la revendication 24, dans lequel la machine à états comprend un état pour chaque mode de classification vocale.

26. Procédé de la revendication 1 ou classificateur vocal de la revendication 7, dans lequel la classification de mode vocal comprend un mode transitoire.

27. Procédé de la revendication 1 ou classificateur vocal de la revendication 7, dans lequel la classification de mode vocal comprend un mode transitoire UP.

28. Procédé de la revendication 1 ou classificateur vocal de la revendication 7, dans lequel la classification de mode vocal comprend un mode transitoire DOWN.

29. Procédé de la revendication 1 ou classificateur vocal de la revendication 7, dans lequel la classification de mode vocal comprend un mode vocalisé.

30. Procédé de la revendication 1 ou classificateur vocal de la revendication 7, dans lequel la classification de mode vocal comprend un mode non vocalisé.

31. Procédé de la revendication 1 ou classificateur vocal de la revendication 7, dans lequel la classification de mode vocal comprend un mode silence.

32. Procédé de la revendication 1 ou classificateur vocal de la revendication 7, comprenant en outre de remettre à jour au moins un paramètre.

33. Procédé ou classificateur vocal de la revendication 32, dans lequel le paramètre remis à jour comprend une FACN au niveau du paramètre de hauteur vocale.

34. Procédé ou classificateur vocal de la revendication 32, dans lequel le paramètre remis à jour comprend un paramètre d'énergie vocalisée moyenne sur trois trames.

35. Procédé ou classificateur vocal de la revendication 32, dans lequel le paramètre remis à jour comprend un paramètre d'énergie de trame anticipé.

36. Procédé ou classificateur vocal de la revendication 32, dans lequel le paramètre remis à jour comprend un paramètre d'énergie vocalisée moyenne sur trois trames précédente.

37. Procédé ou classificateur vocal de la revendication 32, dans lequel le paramètre remis à jour comprend un paramètre de détection d'activité vocale.
